# EUROPEAN PATENT SPECIFICATION

(11) **EP 4 266 655 B1**
(45) Date of publication and mention of the grant of the patent: **03.12.2025**
(21) Application number: 22749917.5
(22) Date of filing: 24.01.2022
(51) Int. Cl.: H04M 1/03, H04M 1/02, G06F 1/16, H04R 1/02, H04R 1/34, H04R 1/28

(54) **ACOUSTIC COMPONENT AND ELECTRONIC DEVICE COMPRISING SAME**
AKUSTISCHE KOMPONENTE UND ELEKTRONISCHE VORRICHTUNG DAMIT
COMPOSANT ACOUSTIQUE, ET DISPOSITIF ÉLECTRONIQUE LE COMPRENANT

(30) Priority: 04.02.2021 KR 20210016070
(43) Date of publication of application: 25.10.2023
(73) Proprietor: Samsung Electronics Co., Ltd., Suwon-si, Gyeonggi-do 16677 (KR)
(72) Inventor: JUNG, Kiyoung, Suwon-si, Gyeonggi-do 16677 (KR); PARK, Sunmin, Suwon-si, Gyeonggi-do 16677 (KR); CHO, Sujin, Suwon-si, Gyeonggi-do 16677 (KR)
(74) Representative: Gulde & Partner
(86) International application number: PCT/KR2022/001242
(87) International publication number: WO 2022/169163

(56) References cited:
- CN-A- 106 162 467
- KR-A- 20180 040 797
- KR-A- 20210 003 538
- US-A1- 2005 136 848
- US-A1- 2009 264 156
- US-A1- 2018 224 903
- US-A1- 2020 021 674
- US-A1- 2020 401 187

## Description

### [Technical Field]

Various embodiments of the disclosure relate to an acoustic component and an electronic device including the same.

### [Background Art]

Thanks to the remarkable development of information communication technology, semiconductor technology, and the like, the distribution and use of various electronic devices are rapidly increasing. In particular, recent electronic devices are being developed such that users are capable of communicating with each other while carrying the electronic devices.

An electronic device refers to a device that performs a specific function according to a program equipped therein, such as an electronic scheduler, a portable multimedia player, a mobile communication terminal, a tablet PC, an image/sound device, a desktop/laptop PC, or a vehicle navigation system, as well as a home appliance. For example, these electronic devices may output information stored therein as sound or an image. With the increase of degree of integration of electronic devices and the generalization of ultra-high-speed and high-capacity wireless communication, recently, a single electronic device, such as a mobile communication terminal, may be provided with various functions. For example, a function, such as an entertainment function (e.g., a game function), a multimedia function (e.g., a music/video reproducing function), a communication and security function for mobile banking, a schedule management function, or an e-wallet function, is integrated in a single electronic device, in addition to a communication function. These electronic devices are being downsized to be conveniently carried by users.

As the mobile communication service is extended to the multimedia service area, the sizes of the displays of electronic devices may be increased so as to allow users to fully utilize a multimedia service as well as a voice call or short message service. Thus, a foldable display may be placed over the entire area of housing structures, which are separated to be foldable. A prior art publication of US 2020/401187 A1 defines a foldable electronic device having a tailored sound system. Another publication of CN 106 162 467 A defines selective opening and closing of an output path of sound generated by an electronic device, where there are two output paths of sound.

### [Detailed Description of the Invention]

### [Technical Problem]

In a general mobile electronic device, a speaker and a receiver may be separately mounted, or a structure in which a speaker and a receiver are integrated may be mounted. In a foldable electronic device, a new structure may be required when applying a speaker and a receiver applied to a general bar-type mobile electronic device or the integrated structure. For example, depending on the unfolded and folded states of the foldable electronic device, the speaker and the receiver or the integrated structure may not be able to perform an operation when an opening designed for sound transmission is shielded.

Various embodiments of the disclosure are able to implement a speaker/receiver-integrated component that is capable of easily operating in an unfolded and/or a folded state of a foldable electronic device and a structure around the same.

### [Technical Solution]

.An aspect of the present invention is an electronic device comprising: a first housing structure including a first rear surface cover; a second housing structure configured to provide a relative motion with respect to the first housing structure; a hinge structure configured to rotatably connect the first housing structure and the second housing structure from a folded state to an unfolded state; a flexible display configured to be variable in response to the relative motion of the second housing structure with respect to the first housing structure; and an acoustic component disposed within the first housing structure and configured to output and input sound, wherein the first housing structure comprises a first opening, a second opening and a conduit extending from the acoustic component to the first and the second openings, and wherein the conduit comprises a first conduit extending toward a first end portion of the first housing structure, a second conduit branching off from the first conduit and extending toward at least a partial area of the first rear surface cover to the first opening, and a third conduit branching off from the first conduit and extending toward at least a partial area of the flexible display to the second opening, wherein, in the unfolded state, a radiation direction of first sound generated by the acoustic component is directed to outside of the rear surface cover side along the second conduit, and a radiation direction of second sound generated by the acoustic component is directed to outside of the flexible display side along the third conduit, wherein, in the folded state, a radiation direction of the first sound generated by the acoustic component is directed to the outside of the rear surface cover side along the second conduit, and a path leading to the outside along the third conduit is limited with respect to the unfolded state.

Preferably, the acoustic component is formed such that a speaker structure and a receiver structure are integrated.

Preferably, the electronic device further comprises an acoustic enclosure configured to provide a space that accommodates the acoustic component and including a first through hole configured to provide a passage for sound generated by the acoustic component.

Preferably, the first housing structure comprises: a side bezel structure configured such that at least a portion thereof covers an outer surface of the electronic device; and a support structure disposed adjacent to the side bezel structure and comprising a second through hole extending from the first through hole.

Preferably, the first through hole of the acoustic enclosure and the second through hole of the support structure are connected to each other to form the first conduit, and the electronic device further comprises a gasket disposed between the first through hole in the acoustic enclosure and the second through hole in the support structure.

Preferably, the acoustic enclosure comprises an inclined surface formed along a circumferential surface adjacent to the first through hole, the inclined surface forming a first predetermined slope with respect to the first rear surface cover, and the gasket is disposed on the inclined surface.

Preferably, an inner wall defining the second conduit is provided by a portion of the support structure and/or a portion of the side bezel structure.

Preferably, a first opening forming at an outermost end of the second conduit is defined by a recessed area in the rear surface cover and a first end portion of the side bezel structure, and a first path of the sound generated by the acoustic component is configured such that the sound passes through the first through-hole and the second through-hole in the first conduit, moves along the second conduit, and is then emitted to the outside through the first opening.

Preferably, an inner wall defining the third conduit is provided by a portion of the support structure and/or a portion of the side bezel structure.

Preferably, a second opening forming at an outermost end of the third conduit is defined in a second end portion of the side bezel structure adjacent to the flexible display, and a second path of the sound generated by the acoustic component is configured such that the sound passes through the first through-hole and the second through-hole in the first conduit, moves along the third conduit, and is then emitted to the outside through the second opening.

Preferably, the third conduit has a structure that penetrates at least a portion of the support structure and then extends to the second opening that penetrates the side bezel structure.

Preferably, the first housing structure comprises a second opening disposed adjacent to the flexible display and forming an outermost end of the third channel, and the second housing structure comprises a damper structure provided in an area corresponding to the second opening in the first housing structure when the electronic device is in the folded state.

Preferably, the damper structure is disposed to surround the second opening or protrudes from one surface of the second housing structure to be inserted into the second opening to shield the second opening from the outside of the electronic device.

### [Advantageous Effects]

In an electronic device including an acoustic component according to various embodiments of the disclosure, it is possible to provide a speaker/receiver-integrated acoustic component that is capable of easily operating when the electronic device is in the unfolded state and/or the folded state.

In an electronic device including an acoustic component according to various embodiments of the disclosure, it is possible to improve the mounting space inside the electronic device and to increase the degree of design freedom by implementing a speaker/receiver-integrated acoustic component.

In an electronic device including an acoustic component according to various embodiments of the disclosure, it is possible to enhance acoustic performance since the acoustic component is implemented in a structure capable of executing forward and/or rearward emission with respect to the electronic device.

Effects that are capable of being obtained by the disclosure are not limited to those described above, and other effects not described above may be clearly understood by a person ordinarily skilled in the art to which the disclosure belongs based on the following description.

### [Brief Description of Drawings]

FIG. 1 is a block diagram of an electronic device according to various embodiments in a network environment.
FIG. 2 is a view illustrating the unfolded state of a foldable electronic device according to various embodiments of the disclosure.
FIG. 3 is a view illustrating the folded state of the foldable electronic device according to various embodiments of the disclosure.
FIG. 4 is an exploded perspective view illustrating the foldable electronic device according to various embodiments of the disclosure.
FIG. 5 is a projection view illustrating an acoustic component located in a first housing structure of the foldable electronic device according to various embodiments of the disclosure.
FIG. 6 is a perspective view illustrating the unfolded state among the folded states of the foldable electronic device according to various embodiments of the disclosure.
FIG. 7 is a cross-sectional view illustrating an acoustic component of the first housing structure and a peripheral area thereof in the unfolded state of the foldable electronic device according to various embodiments of the disclosure.
FIG. 8 is a perspective view illustrating the folded state among the folded states of the foldable electronic device according to various embodiments of the disclosure.
FIG. 9 is a cross-sectional view illustrating a coupling relationship between the first housing structure and a second housing structure in the folded state of the foldable electronic device according to various embodiments of the disclosure.

### [Mode for Carrying out the Invention]

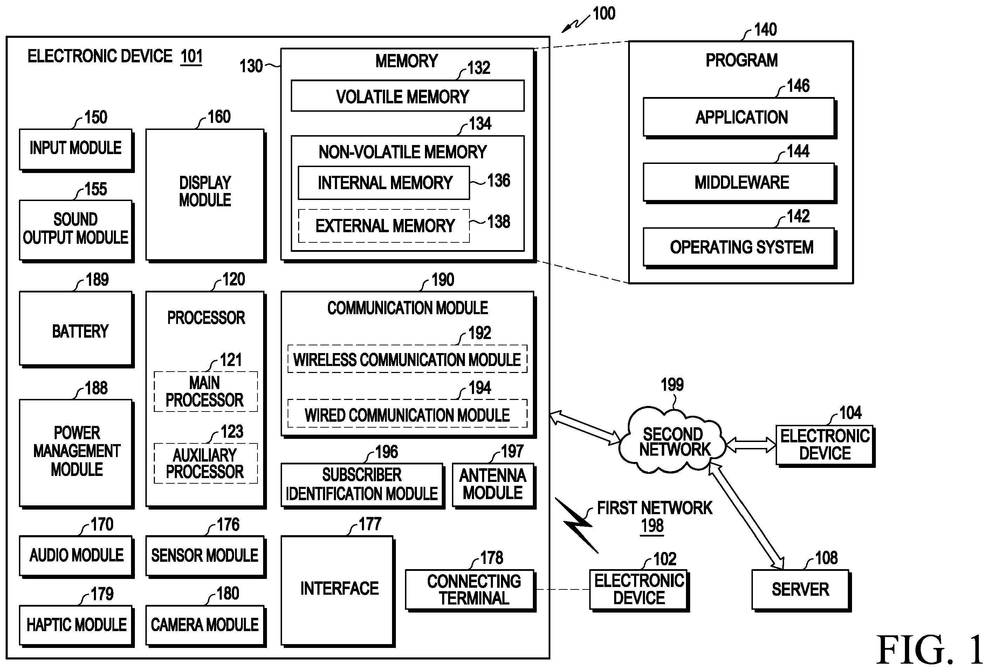

FIG. 1 is a block diagram illustrating an electronic device in a network environment according to various embodiments.

Referring to FIG. 1, the electronic device 101 in the network environment 100 may communicate with an electronic device 102 via a first network 198 (e.g., a short-range wireless communication network), or with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device . According to an embodiment, the antenna module may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

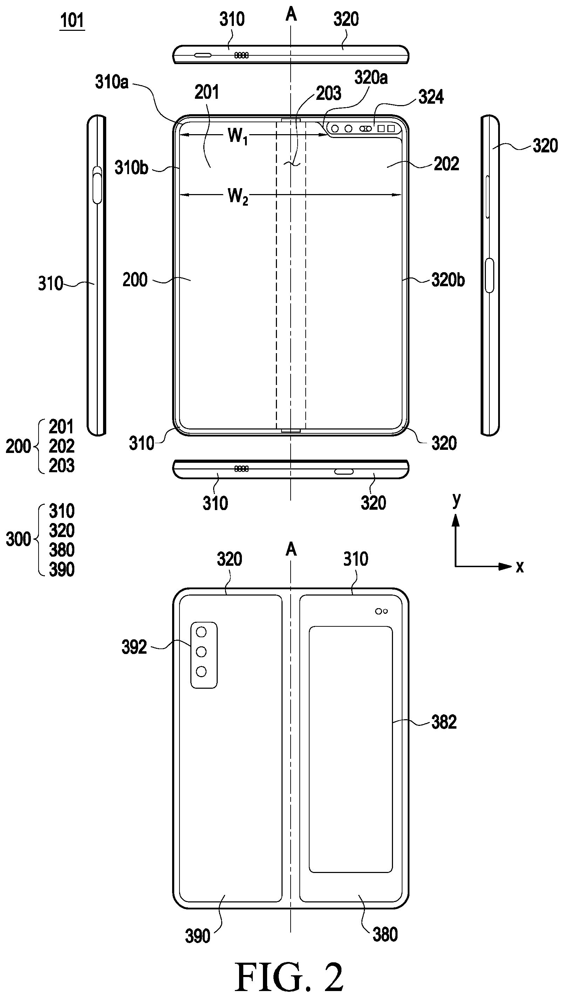

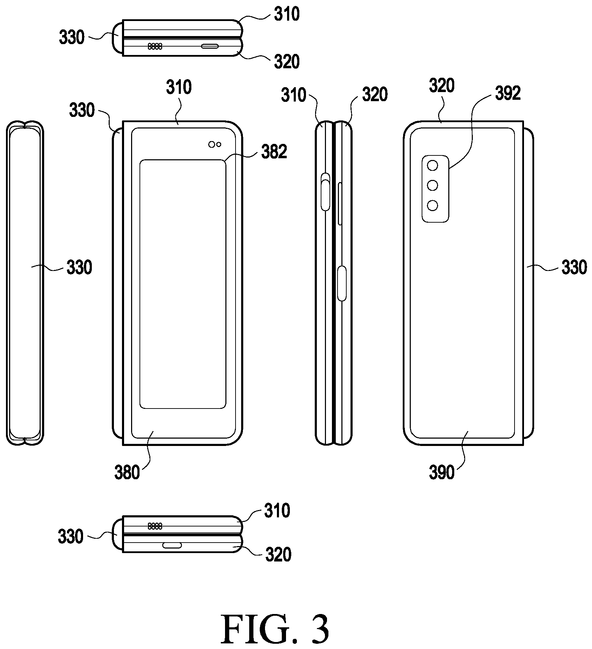

FIG. 2 is a view illustrating the unfolded state among the folded states of the foldable electronic device according to various embodiments of the disclosure. FIG. 3 is a view illustrating the folded state among the folded states of the foldable electronic device according to various embodiments of the disclosure.

Referring to FIGS. 2 and 3, in an embodiment, a foldable electronic device (hereinafter, referred to as an "electronic device" 101) may include a foldable housing 300, a hinge case (e.g., the hinge case 330 in FIG. 3) (e.g., a hinge cover) configured to cover the foldable portion of the foldable housing 300, and a flexible or foldable display 200 (hereinafter, simply referred to as a "display" 200) (e.g., the display device 160 in FIG. 1) disposed in the space defined by the foldable housing 300. According to an embodiment, the surface on which the display 200 is arranged is defined as the front surface of the electronic device 101. In addition, the surface opposite to the front surface is defined as the rear surface of the electronic device 101. In addition, the surface surrounding the space between the front and rear surfaces is defined as the side surface of the electronic device 101.

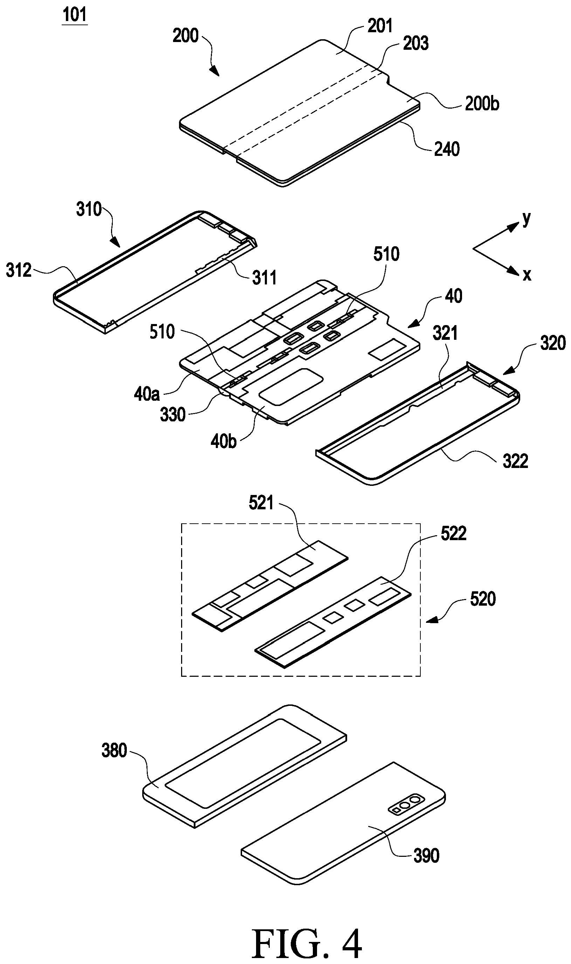

According to various embodiments, the foldable housing 300 may include a first housing structure 310, a second housing structure 320 including a sensor area 324, a first rear surface cover 380, a second rear surface cover 390, and a hinge structure (e.g., the hinge structure 510 in FIG. 4). The foldable housing 300 of the electronic device 101 is not limited to the shape and assembly illustrated in FIGS. 2 and 3, but may be implemented by a combination and/or an assembly of different shapes or components. For example, in another embodiment, the first housing structure 310 and the first rear surface cover 380 may be integrated with each other, and the second housing structure 320 and the second rear surface cover 390 may be integrated with each other.

According to various embodiments, the first housing structure 310 may be connected to the hinge structure (e.g., the hinge structure 510 in FIG. 4), and may include a first surface facing a first direction and a second surface facing a second direction opposite to the first direction. The second housing structure 320 may be connected to the hinge structure 510, and may include a third surface facing a third direction and a fourth surface facing a fourth direction opposite to the third direction. The second housing structure 320 is rotatable about the hinge structure 510 relative to the first housing structure 310. Accordingly, the electronic device 101 may be transformable into the folded state or the unfolded state. In the folded state of the electronic device 101, the first surface may face the third surface, and in the unfolded state, the third direction may be the same as the first direction.

According to various embodiments, the first housing structure 310 and the second housing structure 320 may be disposed on opposite sides about the folding axis A, and may have a generally symmetrical shape with respect to the folding axis A. As will be described later, the first housing structure 310 and the second housing structure 320 may have different angles or distances therebetween depending on whether the electronic device 101 is in the unfolded state, in the folded state, or in the intermediate state in which the electronic device is partially unfolded. According to an embodiment, unlike the first housing structure 310, the second housing structure 320 may further include the sensor area 324 in which various sensors are disposed. However, the first housing structure 310 and the second housing structure 320 may have mutually symmetrical shapes in other areas.

According to various embodiments, as illustrated in FIG. 2, the first housing structure 310 and the second housing structure 320 may define a recess that accommodates the display 200 therein. According to an embodiment, due to the sensor area 324, the recess may have two or more different widths in a direction perpendicular to the folding axis A.

According to an embodiment, the recess may have a first width W₁ between a first portion 310a parallel to the folding axis A of the first housing structure 310 and a first portion 320a provided at the periphery of the sensor area 324 of the second housing structure 320. The recess may have a second width W₂ defined by a second portion 310b of the first housing structure 310 and a second portion 320b of the second housing structure 320, which is parallel to the folding axis A while not corresponding to the sensor area 324. In this case, the second width W₂ may be greater than the first width W₁. As another example, the first portion 310a of the first housing structure 310 and the first portion 320a of the second housing structure 320, which are asymmetric to each other, may define the first width W₁ of the recess, and the second portion 310b of the first housing structure 310 and the second portion 320b of the second housing structure 320, which are symmetric to each other, may define the second width W₂ of the recess. According to an embodiment, the first portion 320a and the second portion 320b of the second housing structure 320 may have different distances from the folding axis A, respectively. The width of the recess is not limited to the illustrated example. In another embodiment, the recess may have multiple widths depending on the shape of the sensor area 324 or depending on the asymmetric portions of the first housing structure 310 and the second housing structure 320.

According to various embodiments, at least a portion of the first housing structure 310 and at least a portion of the second housing structure 320 may be made of a metal material or a non-metal material having the rigidity of a level selected to support the display 200. The at least a portion made of the metal material may provide a ground plane of the electronic device 101, and may be electrically connected to a ground line provided on a printed circuit board (e.g., the board unit 520 in FIG. 4).

According to various embodiments, the sensor area 324 may be provided to have a predetermined area adjacent to one corner of the second housing structure 320. However, the arrangement, shape, and size of the sensor area 324 are not limited to those in the illustrated example. For example, in another embodiment, the sensor area 324 may be provided at another corner of the second housing structure 320 or in any area between the upper and lower end corners. In an embodiment, components embedded in the electronic device 101 to execute various functions may be exposed on the front surface of the electronic device 101 through the sensor area 324 or through one or more openings provided in the sensor area 324. In various embodiments, the components may include various types of sensors. The sensors may include, for example, at least one of a front camera, a receiver, or a proximity sensor.

According to various embodiments, the first rear surface cover 380 may be arranged on one side of the folding axis in the rear surface of the electronic device 101, and may have, for example, a substantially rectangular periphery, which may be enclosed by the first housing structure 310. Similarly, the second rear surface cover 390 may be arranged on the other side of the folding axis of the rear surface of the electronic device 101, and the periphery of the second rear surface cover 390 may be enclosed by the second housing structure 320.

According to various embodiments, the first rear surface cover 380 and the second rear surface cover 390 may have substantially symmetrical shapes about the folding axis (the axis A). However, the first rear surface cover 380 and the second rear surface cover 390 do not necessarily have mutually symmetrical shapes. In another embodiment, the electronic device 101 may include the first rear surface cover 380 and the second rear surface cover 390 having various shapes. In another embodiment, the first rear surface cover 380 may be configured integrally with the first housing structure 310, and the second rear surface cover 390 may be configured integrally with the second housing structure 320.

According to various embodiments, the first rear surface cover 380, the second rear surface cover 390, the first housing structure 310, and the second housing structure 320 may define a space in which various components (e.g., a printed circuit board or a battery) of the electronic device 101 may be disposed. According to an embodiment, one or more components may be disposed or visually exposed on the rear surface of the electronic device 101. For example, at least a portion of a sub-display may be visually exposed through a first rear surface area 382 of the first rear surface cover 380. In another embodiment, one or more components or sensors may be visually exposed through a second rear surface area 392 of the second rear surface cover 390. In various embodiments, the sensors may include a proximity sensor and/or a rear camera.

According to various embodiments, a front camera, which is visually exposed to the front surface of the electronic device 101 through one or more openings provided in the sensor area 324 or a rear camera exposed through the second rear surface area 392 of the second rear surface cover 390, may include one or more lenses, an image sensor, and/or an image signal processor. The flash may include, for example, a light-emitting diode or a xenon lamp. In some embodiments, two or more lenses (e.g., an infrared camera, a wide-angle lens, and a telephoto lens), and image sensors may be disposed on one surface of the electronic device 101.

Referring to FIG. 3, the hinge case 330 may be arranged between the first housing structure 310 and the second housing structure 320 to cover internal components (e.g., the hinge structure 510 in FIG. 4). According to an embodiment, the hinge case 330 may be covered by a portion of the first housing structure 310 and a portion of the second housing structure 320, or may be exposed to the outside depending on the state of the electronic device 101 (the unfolded state, the intermediate state, or the folded state).

According to an embodiment, as illustrated in FIG. 2, when the electronic device 101 is in the unfolded state, the hinge case 330 may not to be exposed by being covered by the first housing structure 310 and the second housing structure 320. As another example, as illustrated in FIG. 3, when the electronic device 101 is in the folded state (e.g., the fully folded state), the hinge case 330 may be exposed to the outside between the first housing structure 310 and the second housing structure 320. As another example, when the first housing 310 and the second housing 320 are in the intermediate state of being folded with a certain angle therebetween, the hinge cover 330 may be partially exposed to the outside between the first housing 310 and the second housing 320. However, the area exposed in this case may be smaller than that in the fully folded state. In an embodiment, the hinge case 330 may include a curved surface.

According to various embodiments, the display 200 may be arranged in a space defined by the foldable housing 300. For example, the display 200 may be seated in the recess defined by the foldable housing 300, and may constitute most of the front surface of the electronic device 101. Accordingly, the front surface of the electronic device 101 may include the display 200, and a partial area of the first housing structure 310 and a partial area of the second housing structure 320, which are adjacent to the display 200. In addition, the rear surface of the electronic device 101 may include a first rear surface cover 380, a partial area of the first housing structure 310 adjacent to the first rear surface cover 380, a second rear surface cover 390, and a partial area of the second housing structure 320 adjacent to the second rear surface cover 390.

According to various embodiments, the display 200 may refer to a display in which at least some area is transformable into a planar surface or a curved surface. According to an embodiment, the display 200 may include a folding area 203, a first area 201 disposed on one side of the folding area 203 (e.g., the left side of the folding area 203 illustrated in FIG. 2), and a second area 202 disposed on the other side of the folding area 203 (e.g., the right side of the folding area 203 illustrated in FIG. 2).

However, the area division of the display 200 illustrated in FIG. 2 is exemplary, and the display 200 may be divided into multiple (e.g., four or more or two) areas depending on the structures or functions thereof. For example, in the embodiment illustrated in FIG. 2, the area of the display 200 may be divided by the folding area 203 or the folding axis (the axis A) extending parallel to the y axis. However, in another embodiment, the area of the display 200 may be divided based on another folding area (e.g., a folding area parallel to the x axis) or another folding axis (e.g., a folding axis parallel to the x axis). According to an embodiment, the display 200 may be coupled to or arranged adjacent to a touch-sensing circuit, a pressure sensor that is capable of measuring touch intensity (pressure), and/or a digitizer that detects a magnetic field-type stylus pen.

According to various embodiments, the first area 201 and the second area 202 may have generally symmetrical shapes about the folding area 203. However, unlike the first area 201, the second area 202 may include a notch cut due to the presence of the sensor area 324, but may have a shape symmetrical to the first area 201 in areas other than the sensor area. In other words, the first area 201 and the second area 202 may include portions having mutually symmetrical shapes and portions having mutually asymmetrical shapes.

Hereinafter, the operations of the first housing structure 310 and the second housing structure 320 depending on the state of the electronic device 101 (e.g., the unfolded state, the folded state, or the intermediate state) and individual areas of the display 200 will be described.

According to various embodiments, when the electronic device 101 is in the unfolded state (e.g., FIG. 2), the first housing structure 310 and the second housing structure 320 may be arranged to form an angle of 180 degrees therebetween and to be face the same direction. The surface of the first area 201 and the surface of the second area 202 of the display 200 form 180 degrees relative to each other, and may face the same direction (e.g., the front direction of the electronic device). The folding area 203 may form the same plane as the first area 201 and the second area 202.

According to various embodiments, when the electronic device 101 is in the folded state (e.g., FIG. 3), the first housing structure 310 and the second housing structure 320 may be arranged to face each other. The surface of the first area 201 and the surface of the second area 202 of the display 200 may face each other while forming a narrow angle (e.g., an angle between 0 and 10 degrees) relative to each other. At least a portion of the folding area 203 may form a curved surface having a predetermined curvature.

According to various embodiments, when the electronic device 101 is in the intermediate state, the first housing structure 310 and the second housing structure 320 may be arranged to form a predetermined angle relative to each other. The surface of the first area 201 and the surface of the second area 202 of the display 200 may form an angle greater than that in the folded state and smaller than that in the unfolded state. At least a portion of the folding area 203 may form a curved surface having a predetermined curvature, and the curvature in this case may be smaller than that in the folded state.

According to various embodiments, the electronic device 101 may include an in-folding type or an out-folding type. The in-folding type may refer to a state in which the flexible display 200 is not exposed to the outside in the fully folded state. As another example, the in-folding type may refer to a state in which the flexible display 200 is folded forward. The out-folding type may refer to a state in which the flexible display 200 is exposed to the outside in the fully folded state. As another example, the out-folding state may refer to a state in which the flexible display 200 is folded rearward.

FIG. 4 is an exploded perspective view illustrating the foldable electronic device according to various embodiments of the disclosure.

Referring to FIG. 4, in various embodiments, the foldable electronic device (hereinafter, referred to as an "electronic device" 101) may include a foldable housing, a flexible display (hereinafter, referred to as a "display" 200), and a board unit 520. The foldable housing may include a first housing structure 310, a second housing structure 320, a first rear surface cover 380, a second rear surface cover 390, a bracket assembly 4000, and a hinge structure 510. The first housing structure 310 may include a first housing 312 and a partial area of the bracket assembly 40 (e.g., a first bracket 40a), and the second housing structure 320 may include a second housing 322 and a partial area of the bracket assembly 40 (e.g., a second bracket 40b).

According to various embodiments, the display 200 may include a display panel 200b (e.g., a flexible display panel), and at least one plate or layer (e.g., a support plate 240) on which the display panel 200b is seated. In an embodiment, the support plate 240 may be arranged between the display panel 200b and the bracket assembly 40. An adhesive structure (not illustrated) may be located between the support plate 240 and the bracket assembly 40 and may bond the support plate 240 to the bracket assembly 40.

According to various embodiments, the bracket assembly 40 may include a first bracket 40a and a second bracket 40b, and the hinge structure 510 may be arranged between the first bracket 40a and the second bracket 40b. The hinge structure 510 may include a hinge case 330 to cover hinges arranged therein. As another example, a printed circuit board (e.g., a flexible printed circuit board (FPC)) may be arranged across the first bracket 40a and the second bracket 40b.

According to various embodiments, the board unit 520 may include a first main circuit board 521 disposed on the first bracket 40a side and a second main circuit board 522 disposed on the second bracket 40b side. The first main circuit board 521 and the second main circuit board 522 may be arranged inside a space defined by the bracket assembly 40, the first housing structure 310, the second housing structure 320, the first rear surface cover 380, and the second rear surface cover 390. Components for implementing various functions of the electronic device 101 may be mounted on the first main circuit board 521 and the second main circuit board 522.

According to various embodiments, the first housing 312 and the second housing 322 may be assembled to be coupled to the opposite sides of the bracket assembly 40 in the state in which the display 200 is coupled to the bracket assembly 40. For example, the first housing 312 may be coupled by being slid from one side of the first bracket 40a, and the second housing 322 may be coupled by being slid from one side of the second bracket 40b.

According to an embodiment, the first housing structure 310 may include a first rotation support surface 311 arranged at one end of the first housing 312, and the second housing structure 320 may include a second rotation support surface 321 arranged at one end of the second housing 322 and corresponding to the first rotation support structure 311. The first rotation support surface 311 and the second rotation support surface 321 may include curved surfaces each of which corresponds to the curved surface included in the hinge case 330.

According to an embodiment, when the electronic device 101 is in the unfolded state (e.g., the electronic device in FIG. 2), the first rotation support surface 311 and the second rotation support surface 321 may cover the hinge case 330 so that the hinge case 330 may not be exposed to the rear surface of the electronic device 101 or may be minimally exposed to the rear surface of the electronic device 101. As another example, when the electronic device 101 is in the folded state (e.g., the electronic device in FIG. 3), the first rotation support surface 311 and the second rotation support surface 321 may rotate along the curved surface included in the hinge case 330 so that the hinge case 330 may be maximally exposed to the rear surface of the electronic device 101.

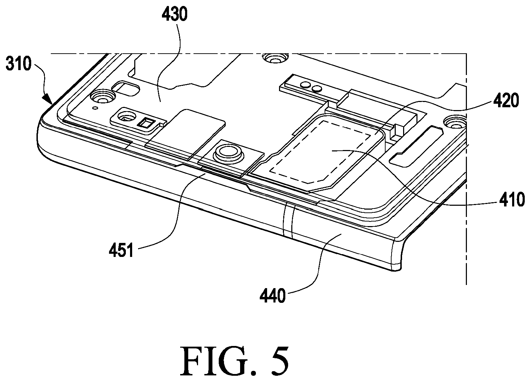

FIG. 5 is a projection view illustrating an acoustic component located in the first housing structure of the foldable electronic device according to various embodiments of the disclosure.

According to various embodiments, an electronic device (e.g., the electronic device 101 in FIGS. 1 to 4) may include a first housing structure 310 and a second housing structure (e.g., the second housing structure 320 in FIGS. 2 and 3), and an acoustic component 410. According to an embodiment, in the electronic device 101, a flexible display (e.g., the flexible display 200 of FIGS. 2 and 3) may be disposed to face the front of the electronic device 101, and the first housing structure 310 (and/or the second housing structure 320) may be disposed to face the rear and side of the electronic device 101. The first housing structure 310 may include a support structure 430 configured to provide a seating space for the acoustic component 410 and the acoustic enclosure 420 and a side bezel structure 440 defining an outer surface of the first housing structure 310.

The configurations of the first housing structure 310 and the acoustic component 410 of FIG. 5 may be wholly or partly the same as the configuration of the first housing structure 310 of FIGS. 2 to 4 and the configuration of the audio module 170 of FIG. 1.

According to various embodiments, the electronic device 101 may include an acoustic component 410. The acoustic component 410 may be disposed within the first housing structure 310 (or the second housing structure 320). The acoustic component 410 may have a structure in which a speaker structure and a receiver structure are integrated, and may be disposed adjacent to one end portion of the first housing structure 310. For example, the acoustic component 410 may including a component configured to generate sound based on an electrical signal and/or a component configured to convert sound into an electrical signal. As another example, multiple acoustic components 410 may be fabricated and disposed adjacent to the upper end portion and/or the lower end portion of the electronic device 101.

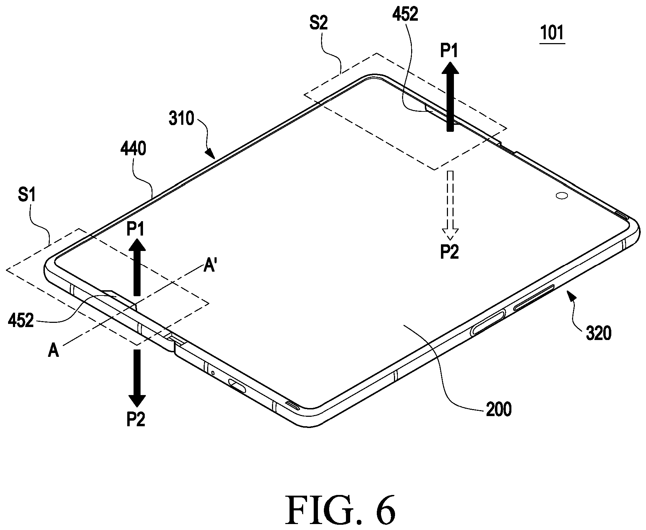

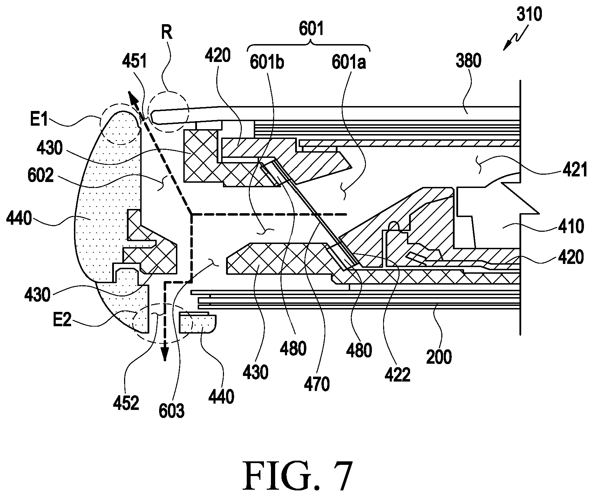

According to various embodiments, the electronic device 101 may include an acoustic enclosure 420 accommodating the acoustic component 410. The acoustic enclosure 420 may include a resonance space (e.g., the resonance space 421 in FIG. 7) configured to provide sound resonance and a conduit (not illustrated) and a through hole (e.g., the first through hole 601a in FIG. 7) configured to transfer vibrations generated in the acoustic component 410 to an external sound emission hole (e.g., the first opening 451 in FIGS. 6 and 7). The radiation hole may also be connected to an acoustic emission hole provided adjacent to the side bezel structure 440 of the first housing structure 310 to emit sound generated by the acoustic component 410 or to transfer sound, which is provided from the outside, to the acoustic component 410.

FIG. 6 is a perspective view illustrating the unfolded state among the folded states of the foldable electronic device according to various embodiments of the disclosure. FIG. 7 is a cross-sectional view illustrating an acoustic component of the first housing structure and a peripheral area thereof in the unfolded state of the foldable electronic device according to various embodiments of the disclosure. FIG. 7 is a cross-sectional view of the lower end area S1 of the foldable electronic device of FIG. 6 taken along line A-A'.

According to various embodiments, an electronic device (e.g., the electronic device 101 of FIGS. 1 to 4) may include a first housing structure 310, a second housing structure 320, a flexible display 200, and an acoustic component 410. According to an embodiment, in the electronic device 101, the flexible display 200 may be disposed to face the front of the electronic device 101, and the first housing structure 310 (and/or the second housing structure 320) may be disposed to face the rear and side of the electronic device 101. For example, the first housing structure 310 may include a first rear surface cover 380 disposed to face the rear of the electronic device 101 and a side bezel structure 440 disposed along the side surface of the electronic device 101.

The configurations of the first housing structure 310, the second housing structure 320, the flexible display 200, and the acoustic component 410 of FIGS. 6 and 7 may be wholly or partly the same as those of the first housing structure 310, the second housing structure 320, the flexible display 200, and the acoustic component 410 of FIG. 5.

According to various embodiments, the electronic device 101 may include an acoustic component 410. The electronic device 101 may further include an acoustic enclosure 420 configured to emit sound generated by the acoustic component 410, and some structures (e.g., a support structure 430 and a side bezel structure 440) of the first housing structure 310. The first housing structure 310 may include a first housing 312 (e.g., the first housing 312 in FIG. 4) and a first bracket 40a (e.g., the first bracket 40a in FIG. 4), wherein the support structure 430 may be a partial area of the first bracket 40a, and the side bezel structure 440 may be a partial area of the first housing 312.

According to an embodiment, the acoustic component 410 may be disposed within the first housing structure 310 (or the second housing structure 320). The acoustic component 410 may have a configuration in which a speaker structure and a receiver structure are integrated and may be disposed in an area adjacent to the periphery of the first housing structure 310 in which an opening is provided (e.g., the side bezel structure 440) to emit sound to the outside or to receive sound generated by the outside.

According to various embodiments, the acoustic enclosure 420 may be disposed within the first housing 312, may accommodate the acoustic component 410, and may include a first through hole 601a configured to provide a passage of sound. The support structure 430 may be disposed within the first housing 312 to support the electronic device 101 as a whole, and a partial area of the support structure 430 may include a second through hole 601b extending from the first through hole 601a. At least a portion of the support structure 430 may be disposed between the acoustic enclosure 420 and the flexible display 200 and may provide one surface on which the acoustic enclosure 420 is disposed.

According to various embodiments, the electronic device 101 may further include a gasket 470 disposed between the acoustic enclosure 420 and the support structure 430. For example, the first through hole 601a of the acoustic enclosure 420 and the second through hole 601b of the support structure 430 may be connected to each other to define a first conduit 601, and the gasket 470 may be located between the first through hole 601a of the acoustic enclosure 420 and the second through hole 601b of the support structure 430. On the one surface of the gasket 470, an adhesive member 480 (and/or a film member) may be disposed to be bonded to the acoustic enclosure 420 and/or the support structure 430.

According to various embodiments, the acoustic enclosure 420 may include a resonance space 421 leading to the inside thereof along a first through hole 271, and a seating surface 422 on which the gasket 470 is seated along the periphery of the first through hole 271. According to an embodiment, the resonance space 421 is an empty space disposed adjacent to the acoustic component 410 and may generate resonance of sound. For example, based on the size (e.g., volume) of the resonance space 421, the performance of the acoustic module may be improved in a low-pitched band (e.g., the 200 to 800 Hz band). As another example, the volume of sound of the low-pitched band may increase based on the size of the resonance space 421. According to an embodiment, the seating surface 275 may be provided in a closed loop shape such that the peripheral area of the gasket 470 can be seated thereon. The seating surface 275 is a circumferential surface adjacent to the first through hole 271 and may provide an inclined surface. For example, the inclined surface may provide a first predetermined slope (e.g., between 0 degrees and 90 degrees) with respect to the flexible display 200 (or the first rear surface cover 380), and the gasket 470 seated on the inclined surface may be located while providing the first predetermined slope as well. According to another embodiment, at least a portion of the inner wall of the acoustic enclosure 420 for the first through hole 601a may provide an inclined surface corresponding to the first predetermined slope.

According to various embodiments, the gasket 470 may be disposed on and bonded to the seating surface 275 of the acoustic enclosure 420 and the inside of the acoustic enclosure 420 may be sealed from the outside of the electronic device 200 (e.g., the external direction from the support structure 430) to prevent foreign substances applied from the outside from being transferred to the acoustic component 410. According to an embodiment, the gasket 470 may include a flexible material to provide variability (e.g., elastic force) with respect to an external pressure. According to an embodiment, the gasket 470 may include multiple of openings (not illustrated). The multiple openings may provide a ventilation function with the outside of the electronic device 101 and a passage function through which sound from the speaker/receiver is propagated or introduced to or from the outside through the first conduit 601. According to an embodiment, the adhesive member 480 may be disposed along the periphery of the gasket 470 and bonded to one surface of the support structure 430 corresponding to the seating surface 422 of the acoustic enclosure 420. The adhesive member 480 may provide a function of sealing the inner space from the outside by shielding the fluid entering a gap between the gasket 470 and the support structure 430.

According to various embodiments, the support structure 430 may include a second through hole 601b extending from the first through hole 601a, and the second through hole 601b may branch into a second conduit 602 and a third conduit 603 directed to different directions. At least a portion of the inner wall of the support structure 430 for the second through hole 601b may provide a second predetermined slope different from the first predetermined slope. For example, the second predetermined slope may be provided in a direction parallel to the flexible display 200 (or the first rear surface cover 380).

According to a claimed embodiment, the second conduit 602 is one passage provided to be directed from the first conduit 601 toward the first rear surface cover 380 side of the first housing structure 310. For example, the inner wall defining the second conduit 602 may be configured with the support structure 430 and/or the side bezel structure 440 connected to the support structure 430, and the first opening 451 disposed at the outermost end of the second conduit 602 may be defined by a recessed area R of the first rear surface cover 380 and a first end E1 (e.g., a portion adjacent to the first cover 380) of the side bezel structure 440. For example, a portion of the inner wall of the second conduit 602 may be a portion of the support structure 430 and another portion of the inner wall may be a portion of the side bezel structure 440 connected to the support structure 430. The sound generated by the acoustic component 410 may pass through the first through hole 601a and the second through hole 601b of the first conduit 601, may move along the second conduit 602, and may be then emitted through the first opening 451.

According to a claimed embodiment, the third conduit 603 is one passage directed from the first conduit 601 toward the flexible display 200 side of the electronic device 101. For example, the inner wall defining the third conduit 603 may be configured with the support structure 430 and/or the side bezel structure 440, and a second opening 452 disposed at the outermost end of the third conduit 603 may be defined by a second end E2 (e.g., a portion adjacent to the flexible display 200) of the side bezel structure 440. For example, the third conduit 603 may have a structure that penetrates at least a portion of the support structure 430 and then extends to the second opening 452 that penetrates the side bezel structure 440. As another example, at least a portion of the third conduit 603 may be disposed adjacent to the flexible display 200 or a portion of the inner wall of the third conduit 603 may be configured with the flexible display 200. The sound generated by the acoustic component 410 may pass through the first through hole 601a and the second through hole 601b of the first conduit 601, may move along the third conduit 603, and may be then emitted through the second opening 452.

According to claimed embodiments, in the state in which the electronic device 101 is unfolded, the sound generated by the acoustic component 410 may be emitted forward P1 and rearward P2. For example, first sound generated by the acoustic component 410 passes through a first path (e.g., the path extending to the first opening 451 through the first conduit 601 and the second conduit 602) and is emitted to the outside of the first rear surface cover 380 side (e.g., rearward P2 emission). Second sound generated by the acoustic component 410 passes through a second path (e.g., the path extending to the second opening 452 through the first conduit 601 and the third conduit 603) and is emitted to the outside of the flexible display 200 side (e.g., forward P1 emission).

According to various embodiments, the electronic device 101 may include multiple acoustic components. For example, the electronic device 101 may include a first acoustic component 410 disposed inside the lower end area S1 of the first housing structure 310 and a second acoustic component (not illustrated) disposed inside the upper end area S2. The foregoing description of the acoustic component 410 is a description of the first acoustic component 410 disposed at the lower end portion of the electronic device 101, but may be applied to the second acoustic component 410. According to a the claimed embodiment, in the state in which the electronic device 101 is unfolded, the sound generated by the first acoustic component 410 and the sound generated by the second acoustic component may be emitted forward P1 and rearward P2, respectively.

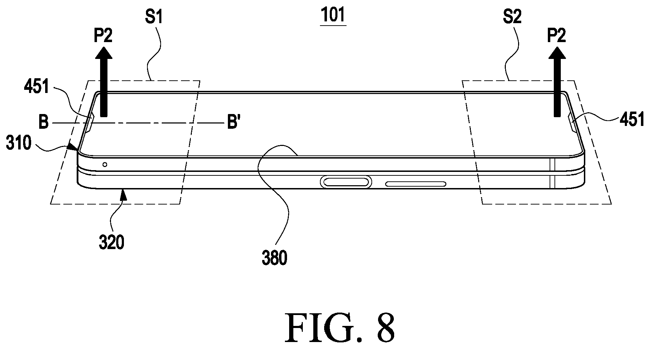

FIG. 8 is a perspective view illustrating the folded state among the folded states of the foldable electronic device according to various embodiments of the disclosure.

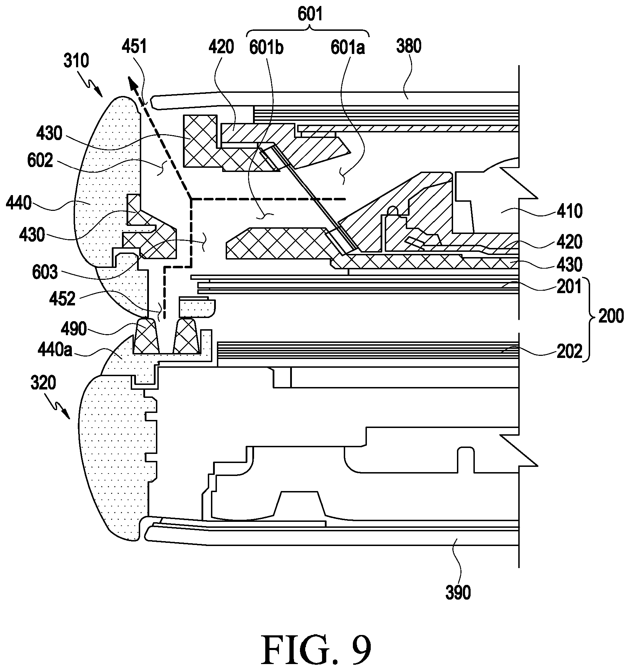

FIG. 9 is a cross-sectional view illustrating a coupling relationship between the first housing structure and a second housing structure in the folded state of the foldable electronic device according to various embodiments of the disclosure. FIG. 9 is a cross-sectional view of the lower end area S1 of the foldable electronic device of FIG. 8 taken along line B-B'.

According to various embodiments, an electronic device (e.g., the electronic device 101 of FIGS. 1 to 4) may include a first housing structure 310, a second housing structure 320, a flexible display 200, and an acoustic component 410. According to an embodiment, in the electronic device 101, the flexible display 200 is bent such that at least some portions thereof are disposed to face each other, and the first housing structure 310 (and/or the second housing structure 320) may be disposed to face the rear (or front) and side of the electronic device 101.

The configurations of the first housing 310, the second housing 320, and the flexible display 200 of FIGS. 8 and 9 may be wholly or partly the same as those of the first housing 310, the second housing 320, and the flexible display 200 of FIGS. 2 to 4.

The configurations of the acoustic component, the acoustic enclosure 420, the support structure 430, and the side bezel structure 440 of FIGS. 8 and 9 may be wholly or partly the same as the acoustic component, the acoustic enclosure 420, the support structure 430, and the side bezel structure 440 of FIGS. 5 to 7. Hereinafter, differences will be mainly described.

According to various embodiments, when the foldable electronic device is in the folded state, the first housing structure 310 and the second housing structure 320 may be disposed at least partially face each other. For example, a first area 201 of the flexible display 200 corresponding to the first housing structure 310 and a second area 202 of the flexible display 200 corresponding to the second housing structure 320 may be disposed to face each other, and the first rear surface cover 380 of the first housing structure 310 and the second rear surface cover 390 of the second housing structure 320 may be disposed to face each other.

According to various embodiments, a damper structure 490 may be provided in a portion of the side bezel structure 440a of the second housing structure 320. When the foldable electronic device is in the folded state, the damper structure 490 may be located in an area corresponding to the second opening 452 of the first housing structure 310. The damper structure 490 may protrude outside compared to other areas of the side bezel structure 440a of the second housing structure 320 and may include a flexible material to provide variability (e.g., elastic force) with respect to an external pressure.

According to various embodiments, the damper structure 490 may be designed to limit the function of the third conduit 603 extending from the acoustic component 410 through the first conduit 601 when the foldable electronic device is in the folded state. According to an embodiment, the damper structure 490 of the second housing structure 320 may be provided to surround the second opening 452 of the first housing structure 310 when the foldable electronic device is in the folded state. For example, the damper structure 490 may have a closed loop shape protruding toward the first housing structure 310 and may be configured to press the periphery of the second opening 452 and to shield the second opening 452 from the outside due to the elastic force. According to another embodiment, the damper structure 490 of the second housing structure 320 may be provided to be inserted into the second opening 452 of the first housing structure 310 when the foldable electronic device is in the folded state. For example, the damper structure 490 may be designed to protrude toward the first housing structure 310 and to have a size corresponding to the size of the second opening 452 to be capable of shielding the second opening 452 from the outside as being inserted into the second opening 452.

When a user makes a call with the foldable electronic device, the foldable electronic device may be generally in the folded state. In this case, the second opening 452, which is one of the sound passages in the first housing structure 310, may be disposed substantially adjacent to the side bezel structure 440a of the second housing structure 320. Accordingly, when the foldable electronic device is in the folded state, noise may be generated in sound to be transmitted or provided to the acoustic component 410 due to the unnecessary second opening 452. In the foldable electronic device according to the disclosure, by designing the damper structure 490 on the side bezel structure 440a of the second housing structure 320 to limit the usage of the third conduit 603 in the first housing structure 310 (e.g., shielding an acoustic path), it is possible to improve acoustic quality.

According to various embodiments, the electronic device 101 may include multiple acoustic components. For example, the electronic device 101 may include a first acoustic component 410 disposed inside the lower end area S1 of the first housing structure 310 and a second acoustic component (not illustrated) disposed inside the upper end area S2. The foregoing description of the acoustic component 410 is a description of the first acoustic component 410 disposed at the lower end portion of the electronic device 101, but may be applied to the second acoustic component 410. According to a claimed embodiment, in the state in which the electronic device 101 is folded, the sound generated by each of the first acoustic component 410 and the second acoustic component is emitted rearward P2 (e.g., the direction faced by the first rear surface cover 380) and the forward P1 emission is limited.

According to various embodiments, depending on the unfolded state (see, for example, FIGS. 6 and 7) and the folded state (see, for example, FIGS. 8 and 9), the electronic device 101 may provide different acoustic operation modes. For example, in the state in which the electronic device 101 is unfolded, the acoustic component 410 may operate in a speaker mode, and in the state in which the electronic device 101 is folded, the acoustic component 410 may operate in a speaker mode or a receiver mode depending on the user's selection. According to another embodiment, the speaker mode and/or the receiver mode may provide different output voltages.

According to various embodiments, in the state in which the electronic device 101 is folded for a call, the user may transmit and receive a call in any direction by the integrated acoustic components 410 located in the lower end area S1 and the upper end area S2. The electronic device 101 may determine the state (e.g., the position) of the electronic device by a sensor module (e.g., an acceleration sensor and/or a geomagnetic sensor) disposed therein and may provide short-range transmission/reception suitable for the user. For example, when the user's mouth is located in the lower end area S1 and the user's ear is located in the upper end area S2, the sensor module may determine the state of the electronic device so that the acoustic component located in the lower end area S1 may operate as a microphone and the acoustic component located in the upper end area S2 may operate as a speaker. As another example, when the user's ear is located in the lower end area S1 and the user's mouth is located in the upper end area S2, the sensor module may determine the state of the electronic device so that the acoustic component located in the lower end area S1 operates as a speaker and the acoustic component located in the upper end area S2 may operate as a microphone.

An electronic device (e.g., the electronic device 101 in FIGS. 1 to 4) according to various embodiments of the disclosure may include a first housing structure (e.g., the first housing structure 310 in FIGS. 2 and 3) including a first rear surface cover (e.g., the first rear surface cover 380 in FIG. 7), a second housing structure (e.g., the second housing structure 320 in FIGS. 2 and 3) configured to provide a relative motion with respect to the first housing structure, a hinge structure (e.g., the hinge structure 510 in FIG. 4) configured to rotatably connect the first housing structure and the second housing structure from a folded state to an unfolded state, a flexible display (e.g., the flexible display 200 in FIG. 4) configured to be variable in response to the relative motion of the second housing structure with respect to the first housing structure, and an acoustic component (e.g., the acoustic component 410 in FIG. 7) disposed within the first housing structure and configured to output and input sound. The first housing structure may include at least one opening and a conduit extending from the acoustic component to the opening, and the conduit may include a first conduit (e.g., the first conduit 601 in FIG. 7) extending toward a first end portion of the first housing structure, a second conduit (e.g., the second conduit 602 in FIG. 7) branching off from the first conduit and extending toward at least a partial area of the first rear surface cover, and a third conduit (e.g., the third conduit 603 in FIG. 7) branching off from the first conduit and extending toward at least a partial area of the flexible display.

According to various embodiments, in the unfolded state, a radiation direction of first sound generated by the acoustic component may be provided to be directed to outside of the rear surface cover side along the second conduit, and a radiation direction of second sound generated by the acoustic component is provided to be directed to outside of the flexible display side along the third conduit.

According to various embodiments, in the folded state, the radiation direction of the first sound generated by the acoustic component is directed to the outside of the rear surface cover side along the second conduit, and a path leading to the outside along the third conduit is limited.

According to various embodiments, the acoustic component is designed such that a speaker structure and a receiver structure are integrated.

According to various embodiments, the electronic device may further include an acoustic enclosure (e.g., the acoustic enclosure 420 in FIG. 7) configured to provide a space that accommodates the acoustic component and including a first through hole (e.g., the first through hole 601a in FIG. 7) configured to provide a passage for sound generated by the acoustic component.

According to various embodiments, the first housing structure may include a side bezel structure (e.g., the side bezel structure 440 in FIG. 7) configured such that at least a portion thereof covers an outer surface of the electronic device; and a support structure (e.g., the support structure 430 in FIG. 7) disposed adjacent to the side bezel structure and including a second through hole (e.g., the second through hole 601b in FIG. 7) extending from the first through hole.

According to various embodiments, the first through hole in the acoustic enclosure and the second through hole in the support structure may be connected to each other to provide the first conduit, and the electronic device may further include a gasket (e.g., the gasket 480 in FIG. 7) disposed between the first through hole in the acoustic enclosure and the second through hole in the support structure.

According to various embodiments, an inner wall defining the second conduit may be provided by a portion of the support structure and/or a portion of the side bezel structure.

According to various embodiments, a first opening disposed at the outermost end of the second conduit may be defined by a recessed area in the rear surface cover and a first end portion of the side bezel structure. A first path of the sound generated by the acoustic component may be configured such that the sound passes through the first through-hole and the second through-hole in the first conduit, moves along the second conduit, and is then emitted to the outside through the first opening.

According to various embodiments, an inner wall defining the third conduit may be provided by a portion of the support structure and/or a portion of the side bezel structure.

According to various embodiments, a second opening disposed at the outermost end of the third conduit may be defined in a second end portion of the side bezel structure adjacent to the flexible display. A second path of the sound generated by the acoustic component may be configured such that the sound passes through the first through-hole and the second through-hole in the first conduit, moves along the third conduit, and is then emitted to the outside through the through opening.

According to various embodiments, the third conduit may have a structure that penetrates at least a portion of the support structure and then extends to the second opening that penetrates the side bezel structure.

According to various embodiments, the first housing structure may include a second opening disposed adjacent to the flexible display and disposed at the outermost end of the third channel. The second housing structure may include a damper structure provided in an area corresponding to the second opening in the first housing structure when the electronic device is in the folded state.

According to various embodiments, the damper structure may be disposed to surround the second opening or protrudes from one surface of the second housing structure to be inserted into the second opening to shield the second opening from the outside of the electronic device.

According to various embodiments, the acoustic enclosure may include an inclined surface provided along a circumferential surface adjacent to the first through hole, the inclined surface providing a first predetermined slope with respect to the first rear surface cover, and the gasket may be disposed on the inclined surface.

An electronic device according to various embodiments may include a first housing structure, a second housing structure configured to provide a relative motion with respect to the first housing structure, a hinge structure configured to rotatably connect the first housing structure and the second housing structure from a folded state to an unfolded state, a flexible display configured to be variable in response to the relative motion of the second housing structure with respect to the first housing structure, an acoustic component disposed in the first housing structure, and including an acoustic component configured to input and output sound, and an acoustic enclosure configured to accommodate the acoustic component and including a first through hole. The first housing structure may include a support structure including a second through hole extending from the first through hole, and a side bezel structure connected to a portion of the support structure and defining an outer surface of the electronic device. The first through hole and the second through hole may define a first path through which sound output from the acoustic component passes, at least a portion of the second path branching off from the first path may be defined by the support structure and the side bezel structure connected to the support structure, and a third path different from the second path branching off from the first path may be defined by the support structure and the flexible display.

According to various embodiments, in the unfolded state, the radiation direction of first sound generated by the acoustic component may be directed to the outside of the rear surface cover side of the electronic device along the second path, and the radiation direction of second sound generated by the acoustic component may be directed to the outside of the flexible display side along the third path.

According to various embodiments, in the folded state, the radiation direction of the first sound generated by the acoustic component is directed to the outside of the rear surface cover side along the second conduit, and a path directed to the outside along the third conduit is limited.

According to various embodiments, the acoustic component may be designed such that a speaker structure and a receiver structure are integrated.

According to various embodiments, the first housing structure may include an opening disposed adjacent to the flexible display and connected to the outside. The second housing structure may include a damper structure provided in an area corresponding to the opening of the first housing structure when the electronic device is in the folded state and configured to shield the opening.

## Claims

1. An electronic device (101) comprising:
a first housing structure (310) including a first rear surface cover (380);
a second housing structure (320) configured to provide a relative motion with respect to the first housing structure (310);
a hinge structure (510) configured to rotatably connect the first housing structure (310) and the second housing structure (320) from a folded state to an unfolded state;
a flexible display (200) configured to be variable in response to the relative motion of the second housing structure (320) with respect to the first housing structure (310); and
an acoustic component (410) disposed within the first housing structure (310) and configured to output and input sound,
the electronic device (101) being **characterized in that**
wherein the first housing structure (310) comprises a first opening (451), a second opening (452) and a conduit (601, 602, 603) extending from the acoustic component (410) to the first and the second openings (451, 452), and
wherein the conduit (601, 602, 603) comprises a first conduit (601) extending toward a first end portion of the first housing structure (310), a second conduit (602) branching off from the first conduit (601) and extending toward at least a partial area of the first rear surface cover (380) to the first opening (451), and a third conduit (603) branching off from the first conduit (601) and extending toward at least a partial area of the flexible display (200) to the second opening (452),
wherein, in the unfolded state, a radiation direction of first sound generated by the acoustic component (410) is directed to outside (P2) of the rear surface cover (380) side along the second conduit (602), and a radiation direction of second sound generated by the acoustic component (410) is directed to outside (P1) of the flexible display (200) side along the third conduit (603),
wherein, in the folded state, a radiation direction of the first sound generated by the acoustic component (410) is directed to the outside (P2) of the rear surface cover side along the second conduit (602), and a path leading to the outside (P1) along the third conduit (603) is limited with respect to the unfolded state.

2. The electronic device (101) of claim 1, wherein the acoustic component (410) is formed such that a speaker structure and a receiver structure are integrated.

3. The electronic device (101) of any of claims 1 to 2, further comprising an acoustic enclosure (420) configured to provide a space that accommodates the acoustic component (410) and including a first through hole configured to provide a passage for sound generated by the acoustic component (410).

4. The electronic device (101) of claim 3, wherein the first housing structure (310) comprises:
a side bezel structure (440) configured such that at least a portion thereof covers an outer surface of the electronic device; and
a support structure (430) disposed adjacent to the side bezel structure (440) and comprising a second through hole extending from the first through hole.

5. The electronic device (101) of claim 4, wherein the first through hole of the acoustic enclosure (420) and the second through hole of the support structure (430) are connected to each other to form the first conduit (601), and
the electronic device (101) further comprises a gasket (470) disposed between the first through hole in the acoustic enclosure (420) and the second through hole in the support structure (430).

6. The electronic device (101) of claim 5, wherein the acoustic enclosure (420) comprises an inclined surface formed along a circumferential surface adjacent to the first through hole, the inclined surface forming a first predetermined slope with respect to the first rear surface cover (380), and
the gasket (470) is disposed on the inclined surface.

7. The electronic device (101) of any of claims 4 or 5, wherein an inner wall defining the second conduit (602) is provided by a portion of the support structure (430) and/or a portion of the side bezel structure (440).

8. The electronic device (101) of claim 7, wherein a first opening (451) forming at an outermost end of the second conduit (602) is defined by a recessed area in the rear surface cover and a first end portion of the side bezel structure (440), and
a first path of the sound generated by the acoustic component (410) is configured such that the sound passes through the first through-hole and the second through-hole in the first conduit (601), moves along the second conduit (602), and is then emitted to the outside through the first opening (451).

9. The electronic device (101) of any of claims 4 to 8, wherein an inner wall defining the third conduit (603) is provided by a portion of the support structure (430) and/or a portion of the side bezel structure (440).

10. The electronic device (101) of claim 9, wherein a second opening (451) forming at an outermost end of the third conduit (603) is defined in a second end portion of the side bezel structure (440) adjacent to the flexible display (200), and
a second path of the sound generated by the acoustic component (410) is configured such that the sound passes through the first through-hole and the second through-hole in the first conduit (601), moves along the third conduit (603), and is then emitted to the outside through the second opening (452).

11. The electronic device (101) of claim 10, wherein the third conduit (603) has a structure that penetrates at least a portion of the support structure (430) and then extends to the second opening (451) that penetrates the side bezel structure (440).

12. The electronic device (101) of any of claims 1 to 11, wherein the first housing structure (310) comprises a second opening (452) disposed adjacent to the flexible display (200) and forming an outermost end of the third channel, and
the second housing structure (320) comprises a damper structure (490) provided in an area corresponding to the second opening (452) in the first housing structure (310) when the electronic device (101) is in the folded state.

13. The electronic device (101) of claim 12, wherein the damper structure (490) is disposed to surround the second opening (452) or protrudes from one surface of the second housing structure (320) to be inserted into the second opening (452) to shield the second opening (452) from the outside of the electronic device (101).

## Patentansprüche

1. Elektronisches Gerät (101), umfassend:
eine erste Gehäusestruktur (310) mit einer ersten Rückflächenabdeckung (380);
eine zweite Gehäusestruktur (320), die so konfiguriert ist, dass sie eine relative Bewegung in Bezug auf die erste Gehäusestruktur (310) ermöglicht;
eine Scharnierstruktur (510), die dazu konfiguriert ist, die erste Gehäusestruktur (310) und die zweite Gehäusestruktur (320) von einem gefalteten Zustand in einen entfalteten Zustand drehbar zu verbinden;
eine flexible Anzeige (200), die so konfiguriert ist, dass sie in Reaktion auf die relative Bewegung der zweiten Gehäusestruktur (320) in Bezug auf die erste Gehäusestruktur (310) variabel ist; und
eine akustische Komponente (410), die innerhalb der ersten Gehäusestruktur (310) angeordnet und zur Ausgabe und Eingabe eines Tons konfiguriert ist,
wobei das elektronische Gerät (101) **dadurch gekennzeichnet ist, dass**
die erste Gehäusestruktur (310) eine erste Öffnung (451), eine zweite Öffnung (452) und eine Leitung (601, 602, 603), die sich von der akustischen Komponente (410) zur ersten und zur zweiten Öffnung (451, 452) erstreckt, umfasst, und
wobei die Leitung (601, 602, 603) eine erste Leitung (601), die sich in Richtung eines ersten Endabschnitts der ersten Gehäusestruktur (310) erstreckt, eine zweite Leitung (602) , das von der ersten Leitung (601) abzweigt und sich in Richtung mindestens eines Teilbereichs der ersten Rückflächenabdeckung (380) zur ersten Öffnung (451) erstreckt, und eine dritte Leitung (603) umfasst, die von der ersten Leitung (601) abzweigt und sich in Richtung mindestens eines Teilbereichs der flexiblen Anzeige (200) zur zweiten Öffnung (452) erstreckt,
wobei im entfalteten Zustand eine Ausstrahlungsrichtung eines von der akustischen Komponente (410) erzeugten ersten Tons entlang der zweiten Leitung (602) zur Außenseite (P2) der Rückflächenabdeckung (380) gerichtet ist, während eine Ausstrahlungsrichtung eines von der akustischen Komponente (410) erzeugten zweiten Tons entlang der dritten Leitung (603) zur Außenseite (P1) der flexiblen Anzeige (200) gerichtet ist,
wobei im gefalteten Zustand eine Ausstrahlungsrichtung des von der akustischen Komponente (410) erzeugten ersten Tons entlang der zweiten Leitung (602) zur Außenseite (P2) der Rückflächenabdeckung gerichtet ist und ein Weg, der entlang der dritten Leitung (603) zur Außenseite (P1) führt, in Bezug auf den entfalteten Zustand begrenzt ist.

2. Elektronisches Gerät (101) nach Anspruch 1, wobei die akustische Komponente (410) so ausgebildet ist, dass eine Lautsprecherstruktur und eine Empfängerstruktur integriert sind.

3. Elektronisches Gerät (101) nach einem der Ansprüche 1 bis 2, umfassend ferner eine akustische Umhüllung (420), die dazu konfiguriert ist, einen Raum zur Aufnahme der akustischen Komponente (410) bereitzustellten, und ein erstes Durchgangsloch umfasst, das dazu konfiguriert ist, einen Durchgang für den von der akustischen Komponente (410) erzeugten Ton bereitzustellen.

4. Elektronisches Gerät (101) nach Anspruch 3, wobei die erste Gehäusestruktur (310) Folgendes umfasst:
eine Seitenblendenstruktur (440), die so konfiguriert ist, dass mindestens ein Abschnitt davon eine Außenfläche des elektronischen Geräts bedeckt; und
eine Stützstruktur (430), die benachbart zur Seitenblendenstruktur (440) angeordnet ist und ein zweites Durchgangsloch umfasst, das sich vom ersten Durchgangsloch erstreckt.

5. Elektronisches Gerät (101) nach Anspruch 4, wobei das erste Durchgangsloch der akustischen Umhüllung (420) und das zweite Durchgangsloch der Stützstruktur (430) miteinander verbunden sind, um die erste Leitung (601) zu bilden, und
wobei das elektronische Gerät (101) ferner eine Dichtung (470) umfasst, die zwischen dem ersten Durchgangsloch in der akustischen Umhüllung (420) und dem zweiten Durchgangsloch in der Stützstruktur (430) angeordnet ist.

6. Elektronisches Gerät (101) nach Anspruch 5, wobei die akustische Umhüllung (420) eine geneigte Fläche umfasst, die entlang einer Umfangsfläche neben dem ersten Durchgangsloch ausgebildet ist, wobei die geneigte Fläche eine erste vorbestimmte Neigung in Bezug auf die erste Rückflächenabdeckung (380) bildet, und
wobei die Dichtung (470) auf der geneigten Fläche angeordnet ist.

7. Elektronisches Gerät (101) nach einem der Ansprüche 4 oder 5, wobei eine Innenwand, die die zweite Leitung (602) definiert, durch einen Abschnitt der Stützstruktur (430) und/oder einen Abschnitt der Seitenblendenstruktur (440) bereitgestellt wird.

8. Elektronisches Gerät (101) nach Anspruch 7, wobei eine erste Öffnung (451), die an einem äußersten Ende der zweiten Leitung (602) ausgebildet ist, durch einen vertieften Bereich in der Rückflächenabdeckung und einen ersten Endabschnitt der Seitenblendenstruktur (440) definiert ist, und
wobei ein erster Weg des von der akustischen Komponente (410) erzeugten Tons so konfiguriert ist, dass der Ton durch das erste Durchgangsloch und das zweite Durchgangsloch in der ersten Leitung (601) hindurchgeht, sich entlang der zweiten Leitung (602) bewegt und dann durch die erste Öffnung (451) nach außen abgestrahlt wird.

9. Elektronisches Gerät (101) nach einem der Ansprüche 4 bis 8, wobei eine Innenwand, die die dritte Leitung (603) definiert, durch einen Abschnitt der Stützstruktur (430) und/oder einen Abschnitt der Seitenblendenstruktur (440) bereitgestellt wird.

10. Elektronisches Gerät (101) nach Anspruch 9, wobei eine zweite Öffnung (451), die an einem äußersten Ende der dritten Leitung (603) ausgebildet ist, in einem zweiten Endabschnitt der Seitenblendenstruktur (440) neben der flexiblen Anzeige (200) definiert ist, und
wobei ein zweiter Weg des von der akustischen Komponente (410) erzeugten Tons so konfiguriert ist, dass der Ton durch das erste Durchgangsloch und das zweite Durchgangsloch in der ersten Leitung (601) hindurchgeht, sich entlang der dritten Leitung (603) bewegt und dann durch die zweite Öffnung (452) nach außen abgestrahlt wird.

11. Elektronisches Gerät (101) nach Anspruch 10, wobei die dritte Leitung (603) eine Struktur aufweist, die mindestens einen Abschnitt der Stützstruktur (430) durchdringt und sich dann zu der zweiten Öffnung (451) erstreckt, die die Seitenblendenstruktur (440) durchdringt.

12. Elektronisches Gerät (101) nach einem der Ansprüche 1 bis 11, wobei die erste Gehäusestruktur (310) eine zweite Öffnung (452) umfasst, die benachbart zu der flexiblen Anzeige (200) angeordnet ist und ein äußerstes Ende des dritten Kanals bildet, und
wobei die zweite Gehäusestruktur (320) eine Dämpferstruktur (490) umfasst, die in einem Bereich vorgesehen ist, der der zweiten Öffnung (452) in der ersten Gehäusestruktur (310) entspricht, wenn sich das elektronische Gerät (101) im gefalteten Zustand befindet.

13. Elektronisches Gerät (101) nach Anspruch 12, wobei die Dämpferstruktur (490) so angeordnet ist, dass sie die zweite Öffnung (452) umgibt, oder aus einer Oberfläche der zweiten Gehäusestruktur (320) herausragt, um in die zweite Öffnung (452) eingeführt zu werden, um die zweite Öffnung (452) von der Außenseite des elektronischen Geräts (101) abzuschirmen.

## Revendications

1. Dispositif électronique (101) comprenant :
une première structure de boîtier (310) comportant un premier couvercle de surface arrière (380) ;
une seconde structure de boîtier (320) configurée pour fournir un mouvement relatif par rapport à la première structure de boîtier (310) ;
une structure de charnière (510) configurée pour relier de façon rotative la première structure de boîtier (310) et la seconde structure de boîtier (320) d'un état plié à un état déplié ;
un afficheur flexible (200) configuré pour être variable en réponse au mouvement relatif de la seconde structure de boîtier (320) par rapport à la première structure de boîtier (310) ; et
un composant acoustique (410) disposé à l'intérieur de la première structure de boîtier (310) et configuré pour émetter et entrer un son,
le dispositif électronique (101) étant **caractérisé en ce que**,
la première structure de boîtier (310) comprend une première ouverture (451), une seconde ouverture (452) et un conduit (601, 602, 603) s'étendant à partir du composant acoustique (410) vers la première et la seconde ouvertures (451, 452), et
le conduit (601, 602, 603) comprend un premier conduit (601) s'étendant vers une première partie d'extrémité de la première structure de boîtier (310), un deuxième conduit (602) partant du premier conduit (601) et s'étendant vers au moins une zone partielle du premier couvercle de surface arrière (380) à la première ouverture (451), et un troisième conduit (603) partant du premier conduit (601) et s'étendant vers au moins une zone partielle de l'afficheur flexible (200) à la seconde ouverture (452),
à l'état déplié, une direction de radiation d'un premier son généré par le composant acoustique (410) est dirigée vers un extérieur (P2) du côté du couvercle de surface arrière (380) le long du deuxième conduit (602), et une direction de radiation d'un second son généré par le composant acoustique (410) est dirigée vers un extérieur (P1) du côté de l'afficheur flexible (200) le long du troisième conduit (603),
dans l'état plié, une direction de radiation du premier son généré par le composant acoustique (410) est dirigée vers l'extérieur (P2) du côté du couvercle de surface arrière le long du deuxième conduit (602), et un chemin menant à l'extérieur (P1) le long du troisième conduit (603) est limité par rapport à l'état déplié.

2. Dispositif électronique (101) selon la revendication 1, dans lequel le composant acoustique (410) est formé de telle sorte qu'une structure de haut-parleur et une structure de récepteur soient intégrées.

3. Dispositif électronique (101) selon l'une quelconque des revendications 1 à 2, comprenant en outre un capot acoustique (420) configuré pour fournir un espace qui loge le composant acoustique (410) et comportant un premier trou traversant configuré pour fournir un passage pour un son généré par le composant acoustique (410).

4. Dispositif électronique (101) selon la revendication 3, dans lequel la première structure de boîtier (310) comprend :
une structure de lunette latérale (440) configurée de telle sorte qu'au moins une partie de celle-ci recouvre une surface extérieure du dispositif électronique ; et
une structure de soutien (430) disposée pour êtreadjacente à la structure de lunette latérale (440) et comprenant un second trou traversant s'étendant à partir du premier trou traversant.

5. Dispositif électronique (101) selon la revendication 4, dans lequel le premier trou traversant du capot acoustique (420) et le second trou traversant de la structure de soutien (430) sont reliés l'un à l'autre pour former le premier conduit (601), et
le dispositif électronique (101) comprend en outre un joint (470) disposé entre le premier trou traversant dans le capot acoustique (420) et le second trou traversant dans la structure de soutien (430).

6. Dispositif électronique (101) selon la revendication 5, dans lequel le capot acoustique (420) comprend une surface inclinée formée le long d'une surface circonférentielle adjacente au premier trou traversant, la surface inclinée formant une première pente prédéterminée par rapport au couvercle de surface arrière (380), et
le joint (470) est disposé sur la surface inclinée.

7. Dispositif électronique (101) selon l'une quelconque de larevendication 4 ou 5, dans lequel une paroi interne délimitant le deuxième conduit (602) est fourni par une partie de la structure de soutien (430) et/ou une partie de la structure de lunette latérale (440).

8. Dispositif électronique (101) selon la revendication 7, dans lequel une première ouverture (451) formant à une extrémité la plus extérieure du deuxième conduit (602) est délimitée par une zone encastrée dans le couvercle de surface arrière et une première partie d'extrémite de la structure de lunette latérale (440), et
un premier chemin du son généré par le composant acoustique (410) est configuré de telle sorte que le son passe à travers le premier trou traversant et le second trou traversant dans le premier conduit (601), se déplace le long du second conduit (602), et puis est émis à l'extérieur à travers la première ouverture (451).

9. Dispositif électronique (101) selon l'une quelconque des revendications 4 à 8, dans lequel une paroi interne délimitant le troisième conduit (603) est fourni par une partie de la structure de soutien (430) et/ou une partie de la structure de lunette latérale (440).

10. Dispositif électronique (101) selon la revendication 9, dans lequel une seconde ouverture (451) formant à une extrémité la plus extérieure du troisième conduit (603) est délimitée dans une seconde partie d'extrémité de la structure de lunette latérale (440) adjacente à l'afficheur flexible (200), et
un second chemin du son généré par le composant acoustique (410) est configuré de telle sorte que le son passe à travers le premier trou traversant et le second trou traversant dans le premier conduit (601), se déplace le long du troisième conduit (603), et puis est émis à l'extérieur à travers la seconde ouverture (452).

11. Dispositif électronique (101) selon la revendication 10, dans lequel le troisième conduit (603) a une structure qui pénètre au moins une partie de la structure de soutien (430) et puis s'étend vers la seconde ouverture (451) qui pénètre la structure de lunette latérale (440).

12. Dispositif électronique (101) selon l'une quelconque des revendications 1 à 11, dans lequel la première structure de boîtier (310) comprend une seconde ouverture (452) disposée pour être adjacente à l'afficheur flexible (200) et formant une extrémité la plus extérieure de la troisième chanel, et
la seconde structure de boîtier (320) comprend une structure d'amortisseur (490) fournie dans une zone correspondante à la seconde ouverture (452) dans la première structure de boîtier (310) lorsque le dispositif électronique (101) est dans l'état plié.

13. Dispositif électronique (101) selon la revendication 12, dans lequel la structure d'amortisseur (490) est disposée pour entourer la seconde ouverture (452) ou fait saillie à partir d'une surface de la seconde structure de boîtier (320) pour être insérée dans la seconde ouverture (452) afin de protéger la seconde ouverture (452) de l'extérieur du dispositif électronique (101).
